# FASCICULE DE BREVET EUROPEEN

(11) **EP 1 334 397 B1**
(45) Date de publication et mention de la délivrance du brevet: **21.01.2009**
(21) Numéro de dépôt: 01996755.3
(22) Date de dépôt: 13.11.2001
(51) Int. Cl.: G02B 27/01

(54) **Méthode de remise à niveau d'un viseur tête haute pour un aéronef à pare-brise courbe**
Aufarbeitungsverfahren eines Head-up Displays für ein Luftfahrzeug mit gekrümmter Windschutzscheibe
Method for upgrading a head-up display for an aircraft having a curved windshield

(30) Priorité: 14.11.2000 FR 0014625
(43) Date de publication de la demande: 13.08.2003
(73) Titulaire: Thales, 75008 Paris (FR)
(72) Inventeur: CHEVREAU, Yannick, Thales Intellectual Property, 94117 Arcueil Cedex (FR); BIGNOLLES, Laurent, Thales Intellectual Property, 94117 Arcueil Cedex (FR); DARRIEUX, Jean-Marc, Thales Intellectual Property, 94117 Arcueil Cedex (FR)
(74) Mandataire: Guérin, Michel
(86) Numéro de dépôt international: PCT/FR2001/003545
(87) Numéro de publication internationale: WO 2002/041035

(56) Documents cités:
- EP-A- 0 377 773
- EP-A- 0 631 167
- EP-A- 0 710 866
- "Head-up display" THE ELECTRONIC ENGINEER, vol. 26, no. 7, juillet 1967 (1967-07), page 29 XP002209937

## Description

L'invention concerne le domaine des viseurs tête haute pour aéronef à pare-brise courbe, c'est-à-dire pour aéronef ayant un pare-brise dont la forme est courbe. Le viseur tête haute est un dispositif optomécanique qui permet de superposer au paysage extérieur vu par le pilote de l'aéronef, une symbologie qui est projetée à l'infini, c'est-à-dire suffisamment loin pour que le pilote n'aie pas à accommoder substantiellement pour voir ladite symbologie. La symbologie comporte par exemple des images synthétiques et des réticules.

Il n'y a pas de difficulté particulière, dans le cas où le pare-brise de l'aéronef est plan, pour que le viseur tête haute superpose, au paysage extérieur, la symbologie projetée à l'infini. Par contre, dans le cas où le pare-brise de l'aéronef est courbe, alors que la symbologie est projetée à l'infini, la cible apparaît au pilote de l'aéronef comme plus proche que la symbologie, ce qui oblige le pilote à accommoder pour passer de la symbologie projetée par le viseur au paysage, et vice-versa. Ce phénomène est appelé parallaxe. En effet, comme la forme du pare-brise est courbe, le pare-brise n'est pas neutre optiquement, c'est un élément optique ayant une certaine puissance optique, généralement divergente car le pare-brise est courbe et d'épaisseur constante. C'est à cause de la puissance optique du pare-brise que la cible apparaît au pilote plus proche que la symbologie projetée à l'infini par le viseur tête haute. Ainsi, lorsque le pilote regarde la cible, il voit la symbologie légèrement dédoublée, par exemple sur quelques milliradians, tandis que lorsque le pilote regarde la symbologie, il voit la cible légèrement dédoublée, par exemple sur quelques milliradians. Ce dédoublement est gênant pour la vision du pilote, par exemple lorsqu'il doit aligner un réticule sur une cible lors d'une phase de tir dans le cas d'un aéronef militaire.

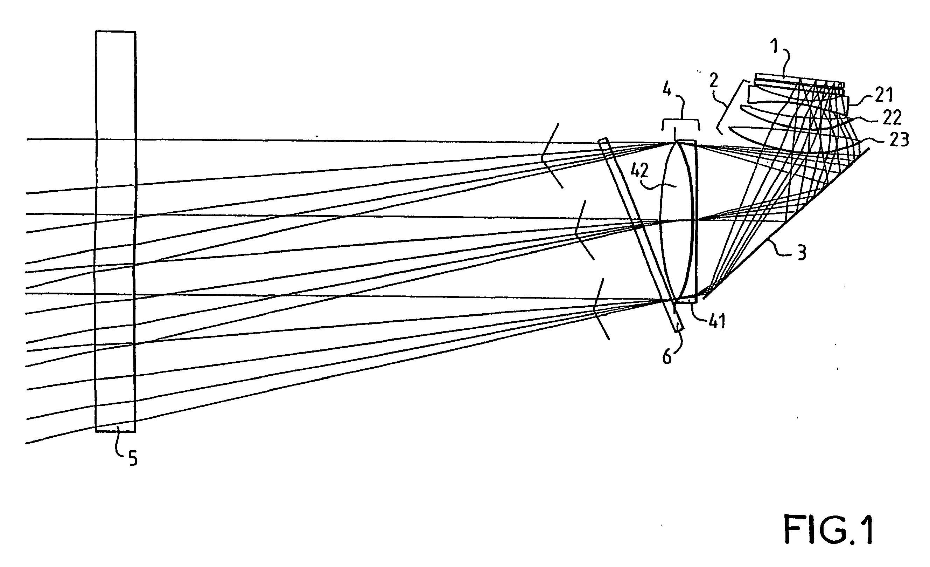

Selon un art antérieur, dont un exemple est représenté sur la figure 1, la parallaxe associée au pare-brise courbe, c'est-à-dire plus précisément à la forme courbe du pare-brise, est corrigée à l'aide d'une lame additionnelle. Cette lame additionnelle est une lame plano-cylindrique, placée à l'extérieur de la combinaison optique du viseur tête haute, en aval du dernier élément optique de ladite combinaison optique, et mécaniquement intégrée dans le viseur tête haute, c'est-à-dire incluse dans le boîtier extérieur du viseur tête haute. Cette lame additionnelle de compensation de la parallaxe associée au pare-brise courbe présente plusieurs inconvénients. L'adjonction de cette lame additionnelle comportant une monture généralement opaque constitue, pour la vision du pilote, un masque supplémentaire, généralement de plusieurs degrés, ce qui entraîne une réduction du champ visuel du pilote, ce qui est gênant pour le pilote, et ce qui risque de supprimer des informations de la symbologie projetée, ce qui est également gênant pour le pilote. De plus, l'intérieur du viseur tête haute est généralement en surpression par rapport à l'extérieur du viseur tête haute, notamment pour empêcher l'humidité ambiante de pénétrer à l'intérieur du viseur tête haute ; il faut donc d'une part concilier la surpression interne du viseur tête haute et la rigidité mécanique de la lame additionnelle de compensation afin d'écarter la possibilité d'explosion de la lame additionnelle de compensation et d'autre part pouvoir rincer à l'aide d'un fluide le volume supplémentaire dû à la présence de la lame additionnelle de compensation. Ce problème de surpression nécessite des adaptations du viseur tête haute qui sont quelquefois difficiles à mettre en oeuvre.

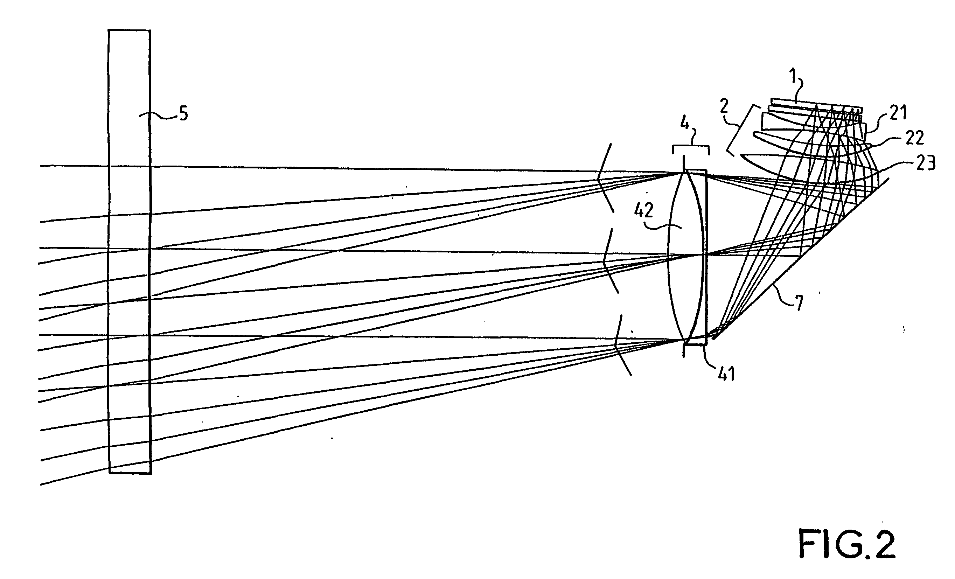

La figure 1 représente schématiquement la combinaison optique d'un viseur tête haute selon l'art antérieur pour aéronef à pare-brise courbe avec l'influence du pare-brise courbe lequel est extérieur au viseur. La direction de propagation des faisceaux lumineux est indiqué par des flèches. D'autres éléments optiques sont situés entre le pare-brise courbe et le viseur tête haute, mais ne sont pas représentés sur la figure 1, car ils n'ont pas de puissance optique, ce sont par exemple des glaces partiellement réfléchissantes dont la fonction est de superposer au paysage extérieur vu par le pilote, la symbologie projetée à l'infini par le viseur tête haute. Entre la sortie de la combinaison optique laquelle comporte des éléments optiques 1, 2, 21, 22, 23, 3, 4, 41, 42 qui seront décrits ultérieurement en liaison avec la figure 2, et le pare-brise 5 courbe, est située une lame 6 additionnelle de compensation de la parallaxe associée au pare-brise 5 courbe. Le miroir 3 de repliement est un simple miroir plan permettant de couder la combinaison optique du viseur tête haute afin de diminuer son encombrement global.

D'autres viseurs tête haute comportant des moyens pour compenser les défauts d'imagerie dus à un pare-brise courbe sont connus dans EP 0631167 et EP 0 710 866.

L'invention propose une solution qui d'une part n'augmente pas le masque visuel du pilote et qui d'autre part ne nécessite pas ou peu d'adaptations particulières, notamment du boîtier extérieur du viseur tête haute et du circuit de rinçage de l'intérieur du viseur tête haute. Pour cela, le viseur tête haute ne nécessite pas de lame additionnelle de compensation, car la parallaxe associée au pare-brise courbe est corrigée par une forme particulière du miroir de repliement que comporte chaque combinaison optique de viseur tête haute. Ainsi, il n'est pas nécessaire d'ajouter un élément optique supplémentaire, la modification de la forme d'un élément optique existant déjà dans la combinaison optique d'un viseur tête haute, à savoir le miroir de repliement, suffit pour corriger la parallaxe associée au pare-brise courbe, voire même supprimer cette parallaxe.

Selon l'invention, il est prévu une méthode de remise à niveau d'un aéronef telle que définie dans la revendication 1.

L'invention sera mieux comprise et d'autres particularités et avantages apparaîtront à l'aide de la description ci-après et des dessins joints, donnés à titre d'exemples, où :
- la figure 1 représente schématiquement la combinaison optique d'un viseur tête haute selon l'art antérieur pour aéronef à pare-brise courbe avec l'influence du pare-brise courbe qui est extérieur au viseur ;
- la figure 2 représente schématiquement la combinaison optique d'un exemple préférentiel de viseur tête haute pour aéronef à pare-brise courbe avec l'influence du pare-brise courbe qui est extérieur au viseur (l'échelle des figures 1 et 2 est d'environ 1/3).

Le viseur tête haute est un viseur pour aéronef à pare-brise courbe. Ce viseur tête haute peut projeter à l'infini une symbologie destinée à être superposée au paysage extérieur que voit le pilote. Ce viseur tête haute comporte une combinaison d'éléments optiques encore appelée combinaison optique. Cette combinaison d'éléments optiques comporte un miroir de repliement au niveau duquel la combinaison optique est coudée. Le miroir de repliement présente une forme courbe laquelle est adaptée pour corriger la parallaxe associée au pare-brise courbe. La parallaxe associée au pare-brise courbe est donc corrigée par le miroir de repliement, ou plus précisément par la forme courbe adaptée du miroir de repliement.

Le viseur tête haute présente plusieurs avantages. D'abord, la parallaxe associée au pare-brise courbe est corrigée voire même supprimée puisqu'elle est compensée, complètement ou au moins substantiellement, par la forme courbe adaptée du miroir de repliement, et ceci sans dégradation substantielle des performances optiques du viseur tête haute. Puis, par rapport à une combinaison optique classique de viseur tête haute, il n'est pas nécessaire d'ajouter d'élément supplémentaire comme la lame additionnelle de compensation de l'art antérieur laquelle augmente le masque visuel lequel est gênant pour le pilote. Ensuite, un seul composant, le miroir de repliement, a besoin d'être modifié pour intégrer la compensation, complète ou au moins substantielle, de la parallaxe associée au pare-brise courbe, les autres éléments optiques de la combinaison optique classique d'un viseur tête haute pouvant rester inchangés, ce qui d'une part permet l'utilisation d'une architecture unique de combinaison optique qui peut être adaptée à plusieurs formes différentes de pare-brise courbe et d'autre part rend l'invention particulièrement intéressante lors de la remise à niveau (« retrofit » en terminologie anglosaxonne) d'un aéronef. La méthode de remise à niveau d'un aéronef comprenant un viseur tête haute et ayant un pare-brise courbe, consiste uniquement, afin d'obtenir une compensation au moins substantielle de la parallaxe associée au pare-brise courbe, à substituer, dans le viseur tête haute selon l'art antérieur, au miroir de repliement existant dont la forme est plane, un miroir de repliement de forme courbe adaptée pour corriger la parallaxe associée au pare-brise courbe. Le peu de modifications nécessaires au niveau du viseur et l'absence de modifications nécessaires à l'extérieur du viseur dans le reste de l'habitacle de l'aéronef, rendent la solution de l'invention particulièrement intéressante dans le cas d'une remise à niveau, encore appelée « modernisation », d'un aéronef dont la forme du pare-brise est courbe. Bien sûr, dans ce cas, la lame additionnelle de compensation étant inutile, si elle existe déjà, elle doit être retirée du viseur tête haute de l'aéronef qui est remis à niveau.

Le viseur tête haute comporte de préférence un tube cathodique créant la symbologie et une combinaison optique permettant de projeter à l'infini cette symbologie, de manière à être vue à l'infini par le pilote. Le viseur tête haute comporte de préférence successivement, du tube cathodique vers la sortie optique du viseur tête haute, un groupe arrière, le miroir de repliement, un groupe avant. Généralement, le groupe avant assure les performances de puissance et corrige une partie du chromatisme, tandis que le groupe arrière assure les performances de qualité d'image dans le champ et corrige la plupart des aberrations.

La figure 2 représente schématiquement la combinaison optique d'un exemple préférentiel de viseur tête haute pour aéronef à pare-brise courbe avec l'influence du pare-brise courbe qui est extérieur au viseur. La direction de propagation des faisceaux lumineux est indiqué par des flèches. D'autres éléments optiques sont situés entre le pare-brise courbe et le viseur tête haute, mais ne sont pas représentés sur la figure 1, car ils n'intéressent pas l'invention, ce sont par exemple des glaces partiellement réfléchissantes dont la fonction est de superposer au paysage extérieur vu par le pilote, la symbologie projetée à l'infini par le viseur tête haute. Le viseur tête haute comporte un tube cathodique 1 émettant la symbologie qui va être projetée à l'infini par la combinaison optique du viseur tête haute, laquelle combinaison comporte plusieurs éléments optiques ou groupes d'éléments optiques : un groupe 2 arrière qui comporte trois lentilles 21, 22 et 23, un groupe 4 avant qui est un doublet constitué de deux lentilles 41 et 42 accolées l'une à l'autre et un miroir 7 de repliement au niveau duquel la combinaison optique est coudée. Le miroir 7 présente une forme courbe qui est adaptée de manière à compenser, complètement ou au moins substantiellement, la parallaxe associée à la forme courbe du pare-brise 5 courbe lequel n'appartient pas au viseur tête haute.

Le miroir 7 de repliement est de préférence concave au niveau de sa surface réfléchissante, c'est-à-dire vu du côté des faisceaux lumineux. En effet, un miroir 7 de repliement concave est un élément optique convergent permettant de compenser au moins substantiellement la puissance optique divergente du pare-brise qui est généralement courbe et d'épaisseur constante.

Dans un mode de réalisation, la forme du miroir 7 de repliement est préférentiellement conique. Le pare-brise 5 associé est alors de préférence également de forme conique. La parallaxe associée au pare-brise 5 de forme conique peut alors être complètement compensée.

Dans un autre mode de réalisation préférentiel, la forme du miroir 7 de repliement est préférentiellement cylindrique. Dans ce cas, la forme du pare-brise associé est de préférence, soit cylindrique soit conique. Dans le cas d'un pare-brise 5 de forme cylindrique, la compensation de parallaxe peut être complète. Dans le cas d'un pare-brise 5 de forme conique, la compensation de parallaxe ne pourra pas être complète, elle ne sera que substantielle. En effet, dans le cas d'un pare-brise 5 de forme conique, la forme cylindrique du miroir 7 de repliement surcompensera légèrement une partie de la pupille de sortie du viseur tête haute tandis qu'elle souscompensera légèrement l'autre partie de cette pupille de sortie du viseur tête haute. Dans ce dernier cas par exemple, la compensation de la parallaxe associée au pare-brise courbe n'est que substantielle. Un miroir 7 de repliement de forme cylindrique a l'avantage d'être plus aisé à fabriquer qu'un miroir 7 de repliement de forme conique. La forme cylindrique du miroir 7 de repliement présente un rayon de courbure qui vaut avantageusement plusieurs mètres, par exemple entre 5m et 20m.

La forme du miroir 7 de repliement est préférentiellement de même nature que celle du pare-brise courbe dont il corrige la parallaxe. Par exemple, si le pare-brise 5 est conique, le miroir 7 de repliement sera conique, et si le pare-brise 5 est cylindrique, le miroir 7 de repliement sera cylindrique. La forme du miroir 7 de repliement ne dépend que de la forme du pare-brise 5, elle est indépendante du reste des éléments optiques du viseur tête haute.

Le miroir 7 de repliement est avantageusement constitué d'une lame de verre sur laquelle est déposée une surface réfléchissante dans le domaine visible. Les faisceaux lumineux arrivent directement sur la surface réfléchissante et sont directement réfléchis par la surface réfléchissante sans traverser la lame de verre. La surface réfléchissante est de préférence un dépôt métallique. La surface réfléchissante est préférentiellement multicouche de manière à être d'une part transparente dans le domaine infrarouge et d'autre part réfléchissante dans le domaine visible. La transparence dans le domaine infrarouge permet d'éviter la formation de points chauds dans le tube cathodique 1 pouvant détériorer celui-ci.

## Revendications

1. Méthode de remise à niveau d'un aéronef comprenant un viseur tête haute et ayant un pare-brise (5) courbe,
• le pare-brise étant extérieur au viseur,
• le viseur tête haute pouvant projeter à l'infini une symbologie destinée à être superposée au paysage extérieur et, comportant une combinaison d'éléments optiques (2, 21, 22, 23, 3, 4, 41, 42, 7) coudée au niveau d'un miroir (3, 7) de repliement,
en outre, le pare-brise étant courbe et d'épaisseur constante, le pare-brise n'est pas neutre optiquement, mais a une certaine puissance optique, cette puissance optique entraînant uneparallaxe obligeant le pilote à accomoder pour passer de la symbologie projétée par le viseur au paysage ladite méthode consistant uniquement à substituer, dans le viseur tête haute dudit aéronef, au miroir (3) de repliement existant de forme plane, un miroir (7) de repliement de forme courbe adaptée pour corriger la parallaxe associée au pare-brise (5) dudit aéronef.

2. Méthode selon la revendication 1, **caractérisé en ce que** la forme du miroir (7) de repliement est de même nature que celle du pare-brise (5).

3. Méthode selon l'une quelconque des revendications précédentes, **caractérisé en ce que** le miroir (7) de repliement est concave.

4. Méthode selon l'une quelconque des revendications précédentes, **caractérisé en ce que** la forme du miroir (7) de repliement est conique.

5. Méthode selon l'une quelconque des revendications 1 à 4, **caractérisé en ce que** la forme du miroir (7) de repliement est cylindrique.

6. Méthode selon la revendication 5, **caractérisé en ce que** le rayon de courbure du miroir (7) de repliement vaut plusieurs mètres.

7. Méthode selon l'une quelconque des revendications précédentes, **caractérisé en ce que** le miroir (7) de repliement est constitué d'une lame de verre sur laquelle est déposée une surface réfléchissante dans le domaine visible.

8. Méthode selon la revendication 7, **caractérisé en ce que** la surface réfléchissante est un dépôt métallique.

9. Méthode selon l'une quelconque des revendications 7 à 8, **caractérisé en ce que** la surface réfléchissante est multicouche de manière à être d'une part transparente dans le domaine infrarouge et d'autre part réfléchissante dans le domaine visible.

10. Méthode selon l'une quelconque des revendications précédentes, **caractérisé en ce que** le viseur tête haute comporte un tube cathodique (1) et une combinaison d'éléments optiques (2, 21, 22, 23, 3, 4, 41, 42, 7) laquelle comporte successivement, du tube cathodique (1) vers la sortie optique du viseur tête haute, un groupe arrière (2), le miroir (7) de repliement, un groupe (4) avant.

## Claims

1. Method retrofitting an aircraft comprising a head-up sight and having a curved windshield (5),
• the windshield being external to the sight,
• the head-up sight being able to project at infinity a symbology intended to be superimposed onto the external scene, and comprising a combination of optical elements (2, 21, 22, 23, 3, 4, 41, 42, 7) bent at an angle to a folding mirror (3, 7),
• furthermore, the windshield being curved and of constant thickness, the windshield is not optically neutral, but has a certain optical power, this optical power causing a parallax that obliges the pilot to make adjustments to switch from the symbology projected by the sight to the landscape
said method consisting solely in substituting a folding mirror (7) of curved shape adapted t correct the parallax associated with the windshield (5) of said aircraft for the existing flat folding mirror (3) in the head-up sight of said aircraft.

2. Method according to Claim 1, **characterized in that** the shape of the folding mirror (7) is of the same type as that of the windshield (5).

3. Method according to either of the preceding claims, **characterized in that** the folding mirror (7) is concave.

4. Method according to any one of the preceding claims, **characterized in that** the shape of the folding mirror (7) is conical.

5. Method according to any one of Claims 1 to 4, **characterized in that** the shape of the folding mirror (7) is cylindrical.

6. Method according to Claim 5, **characterized in that** the radius of curvature of the folding mirror (7) is several meters.

7. Method according to any one of the preceding claims, **characterized in that** the folding mirror (7) consists of a glass plate on which a surface reflecting in the visible region is deposited.

8. Method according to Claim 7, **characterized in that** the reflecting surface is a metal coating.

9. Method according to either of Claims 7 and 8, **characterized in that** the reflecting surface is multilayer so as to be, on the one hand, transparent in the infrared region and, on the other hand, reflecting in the visible region.

10. Method according to any one of the preceding claims, **characterized in that** the head-up sight comprises a cathode-ray tube (1) and a combination of optical elements (2, 21, 22, 23, 3, 4, 41, 42, 7) which combination comprises successively, from the cathode-ray tube (1) to the optical output of the head-up sight, a rear group (2), the folding mirror (7) and a front group (4).

## Patentansprüche

1. Verfahren zur Nachrüstung eines Luftfahrzeugs, das ein Head-up-Display aufweist und eine gekrümmte Windschutzscheibe (5) hat,
• wobei die Windschutzscheibe außerhalb des Displays liegt,
• das Head-up-Display eine Symbologie ins Unendliche projizieren kann, die dazu bestimmt ist, die Außenlandschaft zu überlagern, und eine Kombination von optischen Elementen (2, 21, 22, 23, 3, 4, 41, 42, 7) aufweist, die in Höhe eines Faltungsspiegels (3, 7) gebogen ist,
• da die Windschutzscheibe gekrümmt und von konstanter Dicke ist, ist die Windschutzscheibe außerdem optisch nicht neutral, sondern hat eine gewisse optische Leistung, wobei diese optische Leistung zu einer Parallaxe führt, die den Piloten zu einer Anpassung zwingt, um von der vom Display projizierten Symbologie zur Landschaft überzugehen,
wobei das Verfahren nur darin besteht, im Head-up-Display des Luftfahrzeugs den existierenden Faltspiegel (3) ebener Form durch einen Faltspiegel (7) gekrümmter Form zu ersetzen, um die der Windschutzscheibe (5) des Luftfahrzeugs zugeordnete Parallaxe zu korrigieren.

2. Verfahren nach Anspruch 1, **dadurch gekennzeichnet, dass** die Form des Faltspiegels (7) von der gleichen Art ist wie die diejenige der Windschutzscheibe (5).

3. Verfahren nach einem der vorhergehenden Ansprüche, **dadurch gekennzeichnet, dass** der Faltspiegel (7) konkav ist.

4. Verfahren nach einem der vorhergehenden Ansprüche, **dadurch gekennzeichnet, dass** die Form des Faltspiegels (7) konisch ist.

5. Verfahren nach einem der Ansprüche 1 bis 4, **dadurch gekennzeichnet, dass** die Form des Faltspiegels (7) zylindrisch ist.

6. Verfahren nach Anspruch 5, **dadurch gekennzeichnet, dass** der Krümmungsradius des Faltspiegels (7) mehrere Meter beträgt.

7. Verfahren nach einem der vorhergehenden Ansprüche, **dadurch gekennzeichnet, dass** der Faltspiegel (7) aus einer Glaslamelle besteht, auf die eine im sichtbaren Bereich reflektierende Fläche aufgebracht ist.

8. Verfahren nach Anspruch 7, **dadurch gekennzeichnet, dass** die reflektierende Fläche eine Metallbeschichtung ist.

9. Verfahren nach einem der Ansprüche 7 bis 8, **dadurch gekennzeichnet, dass** die reflektierende Fläche eine Mehrschichtfläche ist, so dass sie einerseits im Infrarotbereich durchlässig und andererseits im sichtbaren Bereich reflektierend ist.

10. Verfahren nach einem der vorhergehenden Ansprüche, **dadurch gekennzeichnet, dass** das Head-up-Display eine Kathodenstrahlröhre (1) und eine Kombination von optischen Elementen (2, 21, 22, 23, 3, 4, 41, 42, 7) aufweist, die nacheinander von der Kathodenstrahlröhre (1) zum optischen Ausgang des Head-up-Displays eine hintere Gruppe (2), den Faltspiegel (7), eine vordere Gruppe (4) aufweist.
